# EUROPEAN PATENT APPLICATION

(11) **EP 2 674 604 A1**
(43) Date of publication of application: **18.12.2013**
(21) Application number: 11858387.1
(22) Date of filing: 08.02.2011
(51) Int. Cl.: F02M 25/07

(54) **EXHAUST CIRCULATION DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: HORIE, Nobuhiko, Toyota-shi, Aichi-ken 471-8571 (JP); NOGUCHI, Tomoyuki, Toyota-shi, Aichi-ken 471-8571 (JP); TOMITA, Takashi, Toyota-shi, Aichi-ken 471-8571 (JP); MIKASHIMA, Kazuya, Toyota-shi, Aichi-ken 471-8571 (JP); YASUE, Akinari, Toyota-shi, Aichi-ken 471-8571 (JP)
(74) Representative: Winter, Brandl, Fürniss, Hübner, Röss, Kaiser, Polte - Partnerschaft
(86) International application number: PCT/JP2011/000687
(87) International publication number: WO 2012/107951

(57) **Abstract**

Provided is an exhaust gas recirculation apparatus of an internal combustion engine which can effectively suppress condensed water from being generated in an EGR passage, compared with the conventional apparatus. The exhaust gas recirculation apparatus includes an EGR pipe formed therein with an EGR passage held in communication with the exhaust passage and the intake passage, an EGR cooler in the EGR passage to cool the EGR gas, a first valve provided in the EGR passage between the EGR cooler and the exhaust passage to selectively take an opened state or a closed state, the first valve being operative to shut off the EGR gas from flowing into the EGR passage when the first valve takes the closed state, a second valve provided in the EGR passage between the EGR cooler and the intake passage to adjust an amount of the EGR gas flowing into the intake passage.

## Description

### {TECHNICAL FIELD}

The present invention relates to an exhaust gas recirculation apparatus of an internal combustion engine.

### {BACKGROUND ART}

Up until now, there has been proposed an exhaust gas recirculation apparatus for recirculating exhaust gas burned in a combustion chamber into an intake passage as EGR gas to reduce a fuel consumption amount of an internal combustion engine (for example see Patent Document 1).

The exhaust gas recirculation apparatus disclosed in the Patent Document 1 comprises an EGR passage for allowing part of the exhaust gas flowing in an exhaust passage to be recirculated into the intake passage, an EGR valve provided in the EGR passage to adjust the flow amount of the EGR gas to be recirculated into the intake passage, and an EGR cooler provided between the EGR valve and the exhaust passage to cool the EGR gas to be recirculated by heat exchange between the EGR gas and cooling water to be used for the internal combustion engine. Part of engine cooling water discharged from a water pump is supplied to the EGR cooler, and the EGR gas is cooled by heat exchange between the EGR gas flowing through the EGR cooler and the engine cooling water.

In the internal combustion engine equipped with the exhaust gas recirculation apparatus disclosed in the Patent Document 1, the EGR gas tends to flow into the EGR cooler due to a pulsation of the exhaust gas in the exhaust passage even when the EGR valve is brought into a fully closed state. As a result, condensed water is generated in the EGR passage, thereby causing corrosion of the elements, parts, and members constituting the exhaust gas recirculation apparatus.

Other than the exhaust gas recirculation apparatus disclosed in the Patent Document 1, another exhaust gas recirculation apparatus is therefore proposed as being located closer to the exhaust passage than an EGR cooler, and equipped with a shutoff valve which is operative to shut off EGR gas supplied from the exhaust passage to an EGR passage (for example see Patent Document 2).

The exhaust gas recirculation apparatus disclosed in the Patent Document 2 comprises an EGR passage communicating an intake passage with the exhaust passage, for recirculating part of the exhaust gas discharged from the internal combustion engine into the intake passage, an EGR cooler disposed in the EGR passage for cooling the EGR gas, a judging unit for judging whether or not condensed water generated as a result of the EGR gas being cooled by the EGR cooler is retained in the EGR cooler, and a suppressing unit for suppressing the EGR gas from flowing into the EGR cooler when the judging unit judges that the condensed water is retained in the EGR cooler, and when the EGR gas is not recirculated into the intake passage.

In the exhaust gas recirculation apparatus disclosed in the Patent Document 2, the shutoff valve is being closed when the EGR valve is maintained in the fully closed state. Accordingly, the exhaust gas recirculation apparatus can suppress the EGR gas from flowing into the EGR cooler and thus can suppress the condensed water from being accumulated in the EGR cooler.

### {CITATION LIST}

### {PATENT LITERATURE}

{PTL 1} Japanese Patent Application Publication No. 2009-228530
{PTL 2} Japanese Patent Application Publication No. 2007-303381

### {SUMMARY OF INVENTION}

### {TECHNICAL PROBLEM}

The above mentioned conventional exhaust gas recirculation apparatus is capable of suppressing the condensed water from being generated in the EGR cooler, resulting from the fact that the shutoff valve is in the closed state while the EGR valve is in the closed state during a warm-up operation of the internal combustion engine. However, the condensed water is likely to be generated in the EGR pipe formed with the EGR passage in the downstream side of the EGR cooler, and in the EGR valve, for example, when the EGR valve and the shutoff valve are shifted from the closed state to the opened state after the warm-up operation of the internal combustion engine is finished.

More specifically, the temperature of the EGR cooler rises to some extent in the above mentioned conventional exhaust gas recirculation apparatus because the engine cooling water is supplied to the EGR cooler, but in particular, the temperatures of the EGR valve and the EGR pipe disposed in the downstream side of the EGR cooler, i.e., in the intake passage side, are difficult to rise. As a consequence, after the shutoff valve is shifted from the closed state to the opened state, the EGR gas passing through the EGR cooler is likely to remain at a dew point temperature or lower, thereby resulting in the condensed water being generated.

It is therefore an object of the present invention to solve the previously mentioned problems and to provide an exhaust gas recirculation apparatus of an internal combustion engine which can effectively suppress condensed water from being generated in an EGR passage, as compared with the conventional apparatus.

### {SOLUTION TO PROBLEM}

To achieve the above object of the present invention, the exhaust gas recirculation apparatus according to the present invention is an exhaust gas recirculation apparatus of an internal combustion engine for recirculating part of exhaust gas discharged into an exhaust passage from the internal combustion engine to an intake passage as EGR gas, and includes: an EGR pipe formed therein with an EGR passage held in communication with the exhaust passage and the intake passage; an EGR cooler provided in the EGR passage to cool the EGR gas; a first valve provided in the EGR passage between the EGR cooler and the exhaust passage and operative to selectively take an opened state or a closed state, the first valve being operative to shut off the EGR gas from flowing into the EGR passage when the first valve takes the closed state; a second valve provided in the EGR passage between the EGR cooler and the intake passage and operative to adjust an amount of the EGR gas flowing into the intake passage; and the EGR cooler and the second valve being directly connected with each other not through the EGR pipe.

By the construction set forth in the above definition, the exhaust gas recirculation apparatus according to the present invention is capable of warming the second valve by heat of the EGR cooler warmed by an engine cooling water at the time of a warm-up operation of the internal combustion engine because the EGR cooler and the second valve are directly connected with each other. Accordingly, even after the second valve is shifted from the closed state to the opened state, it is possible to suppress the EGR gas which has passed through the EGR cooler, from being brought into the dew point temperature or lower, and thus to prevent generation of condensed water.

Also, the exhaust gas recirculation apparatus according to the present invention further includes a cooling water circuit for supplying cooling water to the internal combustion engine, the cooling water circuit being formed to allow the cooling water to be supplied to the EGR cooler and the second valve.

By the construction set forth in the above definition, the exhaust gas recirculation apparatus according to the present invention is capable of heating both of the EGR cooler and the second valve by the cooling water heated by the internal combustion engine during the warm-up operation of the internal combustion engine. Accordingly, when the first valve is shifted from the closed state to the opened state after the warm-up operation of the internal combustion engine, it is possible to prevent the condensed water from being generated in any of the EGR cooler and the second valve.

Also, the exhaust gas recirculation apparatus according to the present invention is adapted so that the first valve is operative to take the closed state when the temperature of the cooling water is lower than a predetermined value.

By the construction set forth in the above definition, the exhaust gas recirculation apparatus according to the present invention is capable of allowing the first valve to take the closed state when the EGR cooler is not yet warmed because of a low temperature of the cooling water. Accordingly, the exhaust gas is prevented from flowing into the EGR passage, and thus it is possible to suppress the EGR gas in the EGR cooler and the second valve from being brought into the dew point temperature or lower and thereby to suppress generation of condensed water.

Also, the exhaust gas recirculation apparatus according to the present invention is adapted to set the predetermined value to a temperature at which the second valve takes the opened state after a warm-up operation of the internal combustion engine is finished.

By the construction set forth in the above definition, the exhaust gas recirculation apparatus according to the present invention is operative to allow the first valve to take the closed state when the exhaust gas recirculation is not carried out because of the internal combustion engine being in the warm-up operation and thus the second valve is in the closed state. Accordingly, the exhaust gas by exhaust pulsation is prevented from flowing into the EGR passage, and thereby making it possible to suppress the EGR gas from being cooled down to the dew point temperature or lower and thus to suppress generation of condensed water.

Also, the exhaust gas recirculation apparatus according to the present invention is adapted to accommodate the EGR cooler and the second valve in one casing.

By the construction set forth in the above definition, the exhaust gas recirculation apparatus according to the present invention can prevent the condensed water from being generated in the second valve when the first valve is shifted to the opened state, regardless of whether or not the cooling water is supplied to the second valve during the warm-up operation of the internal combustion engine, because the second valve is heated by heat transferred from the EGR cooler.

### {ADVANTAGEOUS EFFECTS OF INVENTION}

The exhaust gas recirculation apparatus according to the present invention can suppress the condensed water from being generated in the EGR passage, as compared with the conventional apparatus.

### {BRIEF DESCRIPTION OF DRAWINGS}

FIG. 1 is a schematic construction view showing an exhaust gas recirculation apparatus of an internal combustion engine according to an embodiment of the present invention.
FIG. 2 is a schematic perspective view showing an EGR cooler and an EGR valve according to the embodiment of the present invention.
FIG. 3 is a block diagram showing the exhaust gas recirculation apparatus and its peripheral constitutional portions according to the embodiment of the present invention.
FIG. 4 is a schematic construction view showing the construction of a cooling water circuit according to the embodiment of the present invention.
FIG. 5 is a flowchart for explaining an EGR control according to the embodiment of the present invention.
FIG. 6 is a schematic construction view showing an exhaust gas recirculation apparatus of an internal combustion engine according to another embodiment of the present invention.

### {DESCRIPTION OF EMBODIMENTS}

An exhaust gas recirculation apparatus of an internal combustion engine according to an embodiment of the present invention will be described hereinafter with reference to the drawings.

The present embodiment will be explained about the exhaust gas recirculation apparatus according to the present invention, which is applied to a vehicle having a four-cylinder gasoline engine mounted thereon.

Firstly, the construction of the present embodiment will be explained hereinafter.

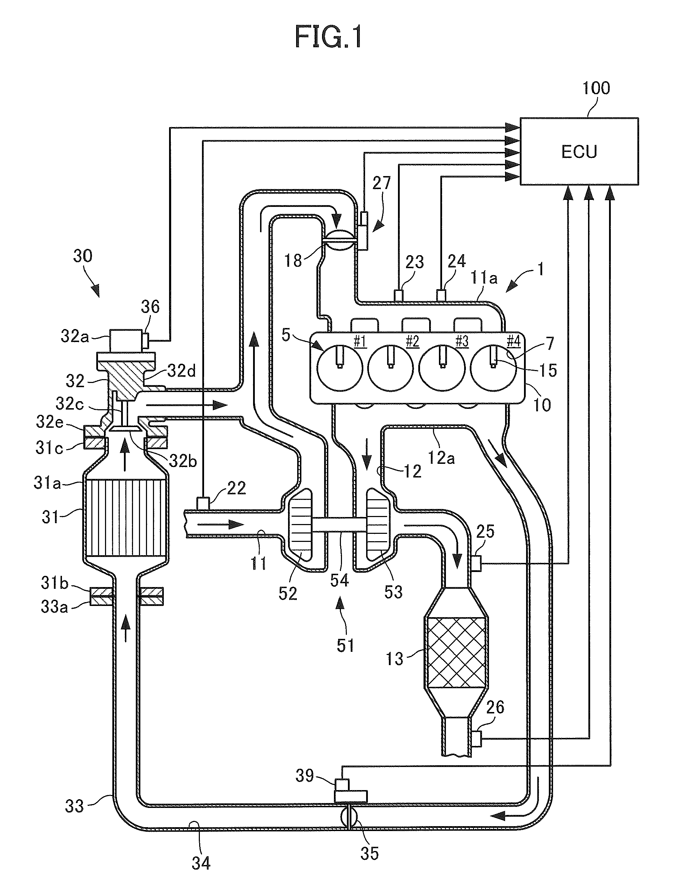

As shown in FIG. 1, an engine 1 is provided with a cylinder head 10, and a cylinder block not shown, the cylinder head 10 and the cylinder block collectively forming four cylinders 5. These cylinders 5 form combustion chambers 7, respectively, with pistons received therein. The cylinder head 10 is formed with suction ports for introducing air into the cylinders 5 and exhaust ports for discharging exhaust gas from the cylinders 5.

Each of the suction ports has an injector formed therein to inject fuel which is mixed with air to form a fuel/air mixture to be introduced into the combustion chamber 7. The cylinder head 10 has ignition plugs 15 each of which serves to ignite the fuel/air mixture to be introduced into each combustion chamber 7. The ignition plugs 15 have respective ignition timings adapted to be controlled by an Electronic Control Unit (hereinafter simply referred to as "ECU") 100 which will hereinafter be described in detail.

The injectors are each constructed by an electromagnet drive type opening and closing valve which is adapted to be opened to inject the fuel to the suction port of each of the cylinders 5 when the electromagnet valve is energized with a predetermined voltage by the ECU 100.

The engine 1 further has an intake manifold 11a connected to the cylinder head 10 and having part of an intake passage 11 formed therein. The intake passage 11 accommodates therein an air cleaner not shown, an air flow meter 22, and an intercooler in this order from the upstream side to the downstream side of the intake passage 11. The intake passage 11 further has a throttle valve 18 disposed at the upstream side of the intake manifold 11a to adjust the amount of intake air. The intake manifold 11a is provided with an intake air temperature sensor 23 and a boost pressure sensor 24.

The intercooler is adapted to forcibly cool the intake air raised in temperature by a supercharge operation of a turbo unit 51 which will be described later. The throttle valve 18 is constituted by an electronically controlled opening and closing valve which is capable of continuously adjusting the opening degree thereof, and is adapted to throttle the passage area of the intake air to adjust the supply amount of the intake air under the predetermined condition. The ECU 100 is operative to control a throttle motor mounted on the throttle valve 18 so as to adjust the opening degree of the throttle valve 18.

The engine 1 further has an exhaust manifold 12a connected to the cylinder head 10 and having part of the intake passage 11 formed therein. The exhaust passage 12 has a catalytic device 13 arranged therein at the downstream side of the exhaust gas flow of the turbo unit 51. The catalytic device 13 is constituted, for example, by a three-way catalyst. The exhaust passage 12 has an A/F sensor 25 disposed thereon at the upstream side of the catalytic device 13. The exhaust passage 12 has an exhaust gas temperature sensor 26 disposed thereon at the downstream side of the catalytic device 13. The A/F sensor 25 and the exhaust gas temperature sensor 26 are operative to output respective signals to the ECU 100.

The engine 1 is further provided with the turbo unit 51. The turbo unit 51 is provided with a turbine wheel 53 rotated by the exhaust gas flowing in the exhaust passage 12, a compressor wheel 52 disposed in the intake passage 11, and a rotary shaft 54 for connecting the turbine wheel 53 and the compressor wheel 52. When the turbine wheel 53 is rotated by the exhaust gas discharged from the combustion chamber 7, the rotation of the turbine wheel 53 is transmitted through the rotary shaft 54 to the compressor wheel 52. This means that the engine 1 is adapted to have the intake air introduced into the combustion chamber 7 by the rotation of the compression wheel 52 in addition to a negative pressure generated in response to the movement of the piston.

The turbo unit 51 is constituted by a variable nozzle turbo unit (VNT), while the ECU 100 is adapted to adjust the opening degree of a variable nozzle mechanism provided at the side of the turbine wheel 53, thereby making it possible to adjust the boost pressure of the engine 1.

The engine 1 is further provided with an EGR apparatus 30. The EGR apparatus 30 is adapted to recirculate part of the exhaust gas flowing in the exhaust passage 12 into the intake passage 11 so as to supply the exhaust gas as an EGR gas to the combustion chamber 7 of each of the cylinders 5, so that the combustion temperature in the combustion chamber 7 can be lowered and thereby the amount of NOx to be generated can be reduced. In addition, the EGR apparatus 30 can reduce a pumping loss, thereby making it possible to improve fuel economy.

The EGR apparatus 30 is provided with an EGR pipe 33 having the intake manifold 11a and the exhaust manifold 12a connected with each other and having an EGR passage 34 formed therein. The EGR pipe 33 is provided with an EGR cooler 31 for cooling the EGR gas passing through the EGR passage 34, and an EGR valve 32 those of which are arranged from the upstream side to the downstream side of the EGR gas flow in this order.

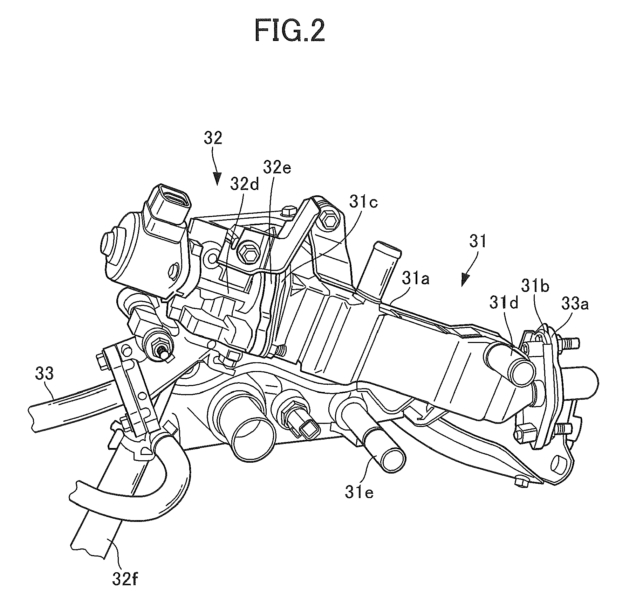

As shown in FIGS. 1 and 2, the EGR cooler 31 comprises a casing 31a, and a cooling water pipe wound around the outer peripheral portion of the passage of the EGR gas in the casing 31a. The EGR gas supplied from the EGR pipe 33 is cooled by the heat exchange with the cooling water flowing in the cooling water pipe when the EGR gas passes through the EGR passage 34 in the casing 31a, and is then introduced to the EGR passage 34 at the downstream side of the EGR cooler 31. The EGR cooler 31 is connected with an inlet pipe 31d for introducing the cooling water passed through the engine 1, and with an outlet pipe 31e connected with another inlet pipe not shown, forming part of the EGR valve 32, so that the cooling water can flow into the cooling water pipe from the inlet pipe 31d, and can be discharged from the outlet pipe 31e.

The EGR valve 32 is provided therein with a linear solenoid 32a, and a shaft 32c. The linear solenoid 32a is therefore accommodated in the EGR valve 32, and the shaft 32c has a base end portion inserted through the linear solenoid 32a, and a forward end portion formed with a valve body 32b for opening and closing the EGR passage 34. By controlling the linear solenoid 32a to be electrically energized or deenergized, the shaft 32c is driven to reciprocate in its axial direction by the electromagnetic force and an urging force of a spring not shown so as to open and close the EGR passage 34 by the valve body 32b. The previously mentioned EGR valve 32 forming part of the exhaust gas recirculation apparatus according to the present embodiment constitutes a second valve as defined in the present invention. The EGR valve 32 may be constructed to be driven by a motor selected from among various kinds of motors such as a stepping motor, a DC motor and the like.

Further, the EGR valve 32 has a casing 32d formed with an EGR valve water passage to surround the shaft 32c. The upstream end portion of the EGR valve water passage is connected with the inlet pipe, so as to allow the cooling water discharged from the outlet pipe 31e of the EGR cooler 31 to be introduced through the inlet pipe into the EGR valve water passage. Also, the downstream end portion of the EGR valve water passage is connected with an outlet pipe 32f. Not only the shaft 32c and the valve body 32b to be exposed to high temperature exhaust gas but also the linear solenoid 32a can be cooled by the cooling water flowing through the EGR valve water passage.

The ECU 100 is operative to adjust the opening degree of the EGR valve 32 and thereby to adjust the amount of the EGR gas, i.e., the recirculation amount of the exhaust gas to be introduced into the intake manifold 11a from the exhaust manifold 12a, resulting from the exhaust passage 12 and the intake passage 11 being brought into communication with each other.

The casing 31a of the EGR cooler 31 is formed of a metal having a thermal conductivity, and has an upstream end portion and a downstream end portion formed with fastening portions 31b and 31c, respectively. The casing 32d of the EGR valve 32 is also formed of a metal having thermal conductivity, and has a fastening portion 32e at the upstream end portion thereof.

As shown in FIG.2, the EGR cooler 31 and the EGR valve 32 each forming part of the exhaust gas recirculation apparatus according to the present embodiment are directly fastened to each other by the fastening portions 31c, 32e not through the EGR pipe. The fastening portions 31c, 32e are respectively constructed by, for example, hermetically sealing and connecting flanges to be fastened to each other by fastening means such as bolts and the like, or alternatively secured to each other by a known method such as a welding or the like. The heat can be conducted through the fastening portions 31c, 32e between the EGR cooler 31 and the EGR valve 32.

The fastening portion 31b of the EGR cooler 31 is fastened to a fastening portion 33a formed on the EGR pipe 33. The fastening portions 31b, 33a are also respectively constructed by, for example, hermetically sealing and connecting flanges which are fastened to each other by fastening means such as bolts and the like, or alternatively secured to each other by a known method such as a welding or the like.

The EGR apparatus 30 forming part of the exhaust gas recirculation apparatus according to the present embodiment is further provided with an EGR shutoff valve 35 at the upstream side of the EGR cooler 31. The EGR shutoff valve 35 is constructed by a valve such as a diaphragm valve or an electromagnetically driven valve which can take either one of a fully opened state and a fully closed state. As described later, the EGR shutoff valve 35 is operative to shut off the EGR passage 34 so as to prevent the exhaust gas discharged into the exhaust manifold 12a from flowing into the EGR apparatus 30 under the predetermined operation condition. According to the present invention, the EGR shutoff valve 35 may be constructed by a valve which can take a desired state between the fully opened state and the fully closed state. The EGR shutoff valve 35 forming part of the exhaust gas recirculation apparatus according to the present embodiment constitutes a first valve as defined in the present invention.

The parts of the engine 1 are installed with respective sensors which are operative to output signals indicative of respective detected results to the ECU 100 as will be understood from the following description.

A cooling water temperature sensor 21 is disposed on a water jacket formed in the cylinder block of the engine 1 to output a detection signal indicative of a cooling water temperature THW of the engine 1 to the ECU 100. The air flow meter 22 is disposed in the intake passage 11 at the upstream side of the throttle valve 18 to output a detection signal indicative of the intake air amount to the ECU 100. The intake air temperature sensor 23 is disposed in the intake manifold 11a to output a detection signal indicative of the temperature of the intake air to the ECU 100. The boost pressure sensor 24 is disposed in the intake manifold 11a to output a detection signal indicative of the boost pressure to the ECU 100.

The A/F sensor 25 is disposed in the exhaust passage 12 at the upstream side of the catalytic device 13 to output a detection signal indicative of the oxygen concentration in the exhaust gas (exhaust A/F) to the ECU 100. The exhaust gas temperature sensor 26 is disposed in the exhaust passage 12 at the downstream side of the catalytic device 13 to output a detection signal indicative of the temperature of the exhaust gas to the ECU 100. The valve opening degree sensor 36 is operative to output a detection signal indicative of the opening degree of the EGR valve 32 to the ECU 100. The shutoff valve opening degree sensor 39 is operative to output a detection signal indicative of the opening degree of the EGR shutoff valve 35 to the ECU 100.

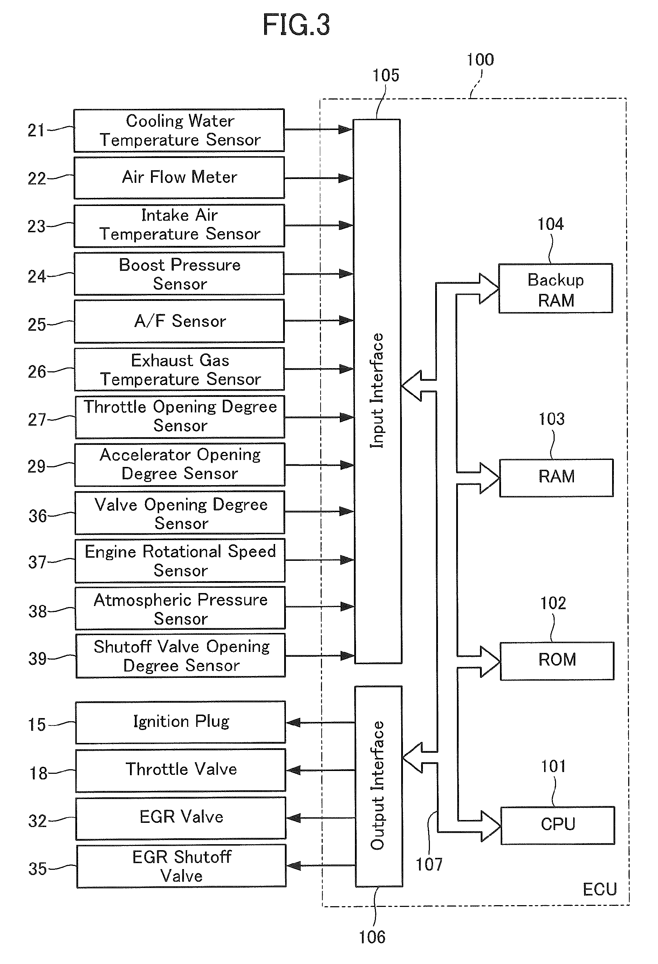

The vehicle having the engine 1 mounted thereon further comprises the ECU 100. As shown in FIG.3, the ECU 100 comprises a CPU (Central Processing Unit) 101, a ROM (Read Only Memory) 102, a RAM (Random Access Memory) 103 and a backup RAM104 and the like. The ECU 100 mentioned in the present embodiment constitutes part of the exhaust gas recirculation apparatus according to the present invention.

The ROM 102 is adapted to memorize various kinds of control programs including a program for executing the EGR control to adjust the exhaust gas circulation amount, and a control program for controlling the fuel injection amount to the cylinder 5, and maps to be referred to at the time of executing the above various kinds of control programs. The CPU 101 is adapted to execute various kinds of arithmetic processing based on the various kinds of control programs and the maps memorized in the ROM 102. The RAM 103 is adapted to temporarily memorize the results of the arithmetic processing and the data inputted from the above sensors and the like. The backup RAM 104 is constituted by a non-volatile memory and is adapted to memorize, for example, the data and the like to be stored at the time of stopping the engine 1.

The CPU 101, the ROM 102, the RAM 103 and the backup RAM 104 are connected through a bus 107 to one another, and are connected to an input interface 105 and an output interface 106.

The input interface 105 is connected with the cooling water temperature sensor 21, the air flow meter 22, the intake air temperature sensor 23, the boost pressure sensor 24, the A/F sensor 25, the exhaust gas temperature sensor 26, an accelerator opening degree sensor 29 which is adapted to output a detection signal indicative of the depression amount of the acceleration pedal, a throttle opening degree sensor 27 which is adapted to output a detection signal indicative of the opening degree of the throttle valve 18, an engine rotational speed sensor 37 which is adapted to detect the rotational speed of the crank shaft of the engine 1 and to output the detected rotational speed as an engine rotational speed, an atmospheric pressure sensor 38 for detecting the atmospheric pressure, the valve opening degree sensor 36, and the shutoff valve opening degree sensor 39.

The output interface 106 is connected with the ignition plug 15, the throttle valve 18, the EGR valve 32, the EGR shutoff valve 35, and the injector not shown and the like.

The ECU 100 is adapted to execute various kinds of controls for the engine 1, including the EGR control and the fuel injection amount control based on the outputs of the above various kinds of the sensors.

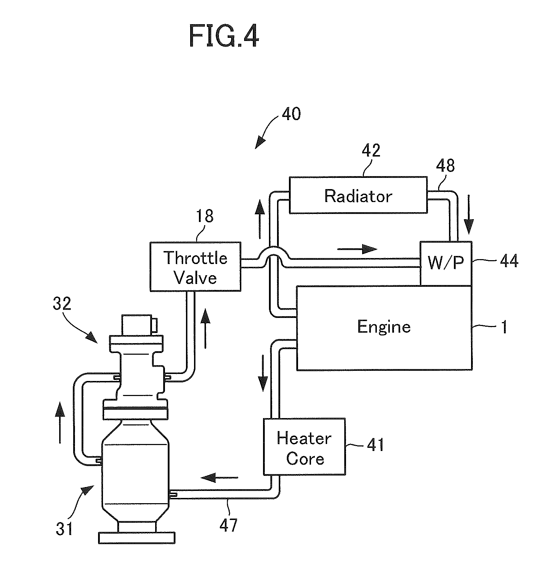

FIG. 4 is a schematic construction view showing the construction of a cooling water circuit 40 for supplying the cooling water to the EGR apparatus 30 in the present embodiment. The cooling water circuit 40 has a first passage 47 and a second passage 48. The first passage 47 is adapted to supply the cooling water discharged from a water pump 44 to the engine 1, a heater core 41, the EGR cooler 31, the EGR valve 32 and the throttle valve 18 in this order and to return the cooling water to the water pump 44. The second passage 48 is bifurcated from the first passage 47 by a three-way valve not shown, provided in the downstream of the cylinder head 10 constituting part of the engine 1, and is adapted to supply part of the cooling water flowed from the engine 1 to a radiator 42 and to return the cooling water to the water pump 44.

The cooling water recirculated through the first passage 47 is heated by the heat exchange with the cylinder block and the cylinder head 10 forming parts of the engine 1, cooled by the heat exchange with the heater core 41, and then supplied to the EGR cooler 31.

On the other hand, the cooling water recirculated through the second passage 48 is separated from the first passage 47 by the three-way valve not shown, provided in the downstream of the cylinder head 10, and then supplied to the radiator 42 where the cooling water is cooled by the heat exchange with the outside air. The second passage 48 has a thermostat not shown, disposed thereon. The thermostat is adapted to shut off the passage between the radiator 42 and the water pump 44 when the temperature THW of the cooling water of the engine 1 is lower than the temperature of the cooling water of the engine 1 at the usual travelling of the vehicle due to the warm-up operation and the travelling in the cold region. Moreover, the thermostat is adapted to gradually open the passage between the radiator 42 and the water pump 44 and thus to increase the percentage of the amount of the cooling water recirculated in the second passage 48 to the amount of the cooling water recirculated in the first passage 47 as the temperature THW of the cooling water is raised.

The ECU 100 constituting the control apparatus in the embodiment of the present invention is operative to allow the EGR shutoff valve 35 to be shifted to the closed state based on the signal inputted from the cooling water temperature sensor 21 when the ECU 100 judges that the temperature THW of the cooling water is less than the predetermined value THWth.

The predetermined value THWth is set to a temperature of, for example, 70°C at which the EGR control is started after the warm-up operation of the engine 1 is finished. Here, the dew point temperature of the exhaust gas is 60°C or lower, and the temperature of the EGR gas which is lowered by the EGR cooler 31 is a few °C. Accordingly, even if the exhaust gas is supplied to the EGR apparatus 30 when the temperature THW of the cooling water is 70°C or higher, the condensed water can be suppressed from being generated in the EGR cooler 31. Moreover, since the cooling water is also supplied to the EGR valve 32, the condensed water can also be suppressed from being generated in the EGR valve 32.

Also, the EGR apparatus 30 in the present embodiment is different from the conventional EGR apparatus, and thus is not provided with any EGR pipe heated by the cooling water between the EGR cooler 31 and the EGR valve 32. Accordingly, when the temperature THW of the cooling water reaches the predetermined value THWth and the EGR shutoff valve 35 is shifted from the fully closed state to the fully opened state in the conventional EGR apparatus, the EGR pipe is not yet sufficiently warmed and thus the condensed water may be generated in the EGR pipe. In contrast, the EGR apparatus 30 in the present embodiment is constructed to have the condensed water not generated due to the EGR gas between the EGR cooler 31 and the EGR valve 32 not being cooled even if the EGR shutoff valve 35 is shifted to the opened state after the warm-up operation of the engine 1.

Moreover, when the EGR valve 32 is shifted to the fully closed state under the EGR control which is not performed by the ECU 100, the ECU 100 is operative to allow the EGR shutoff valve 35 to be shifted to the fully closed state and thus to prevent the exhaust gas from flowing into the EGR apparatus 30 even with exhaust gas pulsation. In this way, the exhaust gas recirculation apparatus according to the embodiment of the present invention is constructed to allow the EGR shutoff valve 35 to take the fully closed state if the EGR valve 32 takes the fully closed state, and to allow the EGR shutoff valve 35 to take the fully opened state if the EGR valve 32 takes the opened state, i.e., a state other than the fully closed state.

The ECU 100 is operative to allow the EGR shutoff valve 35 to be shifted to the fully opened state and to start the EGR control when the ECU 100 judges that the temperature THW of the cooling water exceeds 70°C based on the signal inputted from the cooling water temperature sensor 21.

The ECU 100 is operative to perform the EGR control in which the EGR valve 32 is controlled to adjust the flow amount of the EGR gas when the ECU 100 judges that the warm-up operation of the engine 1 is finished, and allows the EGR shutoff valve 35 to be shifted to the opened state. The ECU 100 is adapted to memorize in the ROM 102 the opening degree map associating the engine rotational speed and the engine load with the opening degree of the EGR valve 32. The ECU 100 is adapted to set the opening degree of the EGR valve 32 with reference to the opening degree map memorized in the ROM 102 when the ECU 100 acquires the information about the engine rotational speed detected by the engine rotational speed sensor 37 and the engine load to be obtained from the amount of the intake air detected by the air flow meter 22.

The ECU 100 is adapted to preliminarily memorize in the ROM 102 the engine load map associating the amount of the intake air with the engine load. The relationship between the amount of the intake air and the engine load can be obtained by the experimental measurements preliminarily carried out. The engine load can be calculated by a known method such as, for example, a method of calculating the engine load from the fuel injection amount in the engine 1 in lieu of the amount of the intake air.

Next, the operation of the exhaust gas recirculation apparatus according to the embodiment of the present invention will be described hereinafter.

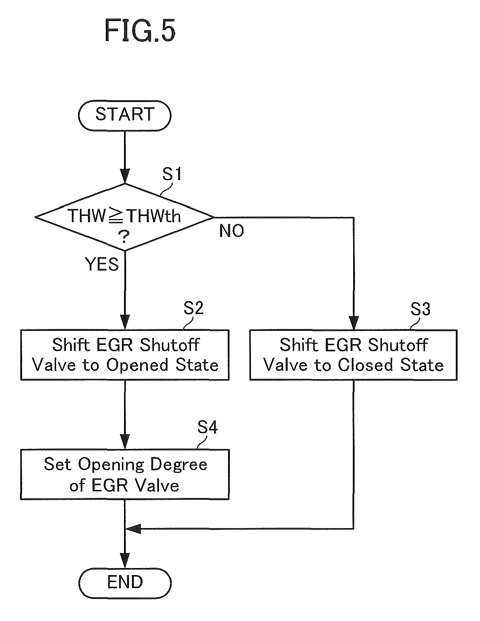

FIG. 5 is a flow chart for explaining the EGR control according to the embodiment of the present invention. The following processing is executed at a predetermined time interval by the CPU 101 constituting part of the ECU 100, and realizes a program which can be executed by the CPU 101.

The ECU 100 is operated to judge whether or not the temperature THW of the cooling water is equal to or higher than the predetermined value THWth based on the signal acquired from the cooling water temperature sensor 21 (Step S1).

When the ECU 100 judges that the temperature THW of the cooling water is equal to or higher than the predetermined value THWth ("YES" in Step S1), the EGR shutoff valve 35 is shifted from the closed state to the opened state (Step S2) due to the fact that no condensed water is generated in the EGR cooler 31 and the EGR valve 32 even if the exhaust gas flows into the EGR pipe 33 as the EGR gas.

When, on the other hand, the ECU 100 judges that the temperature THW of the cooling water does not reach the predetermined value THWth ("NO" in Step S1), the EGR shutoff valve 35 is shifted to the closed state (Step S3), and then the process moves to " RETURN", in order to prevent the condensed water from being generated in the EGR cooler 31 or the EGR valve 32 as a result of the exhaust gas flowing into the EGR pipe 33 and being cooled down to the dew point temperature or lower. If the EGR shutoff valve 35 has already been in the closed state in Step 3, the ECU 100 is operated to allow the EGR shutoff valve 35 to continue to take the closed state.

Then, the ECU 100 executes the control of the EGR valve 32 (step S4). More specifically, the ECU 100 is operated to acquire the signal indicative of the engine rotational speed from the engine rotational speed sensor 37, and to calculate the engine load based on the signal inputted from the air flow meter 22 and the engine load map memorized in the ROM 102. Then the ECU 100 is operated to set the opening degree of the EGR valve 32 based on the opening degree map memorized in the ROM 102.

As will be understood from the foregoing description, the exhaust gas recirculation apparatus according to the embodiment of the present invention is constructed to have the EGR cooler 31 and the EGR valve 32 connected directly to each other, so that the EGR valve 32 can be warmed by heat from the EGR cooler 31 which is warmed by the cooling water in the warm-up operation of the engine 1. This means that the EGR valve 32 is warmed due to the fact that the heat from the EGR cooler 31 warmed by the cooling water is transmitted to the EGR valve 32. Accordingly, even after the EGR valve 32 is shifted from the closed state to the opened state, the EGR gas which has passed through the EGR cooler 31 can be suppressed from being cooled down to the dew point temperature or lower, thereby making it possible to suppress the condensed water from being generated in both of the EGR cooler 31 and the EGR valve 32.

Further, the cooling water circuit 40 recirculating the cooling water of the engine 1 is constructed to supply the cooling water to the EGR cooler 31 and the EGR valve 32, and thus both of the EGR cooler 31 and the EGR valve 32 can be heated by the cooling water which is warmed up by the engine 1 during the warm-up operation of the engine 1. Accordingly, the condensed water can be prevented from being generated in either one of the EGR cooler 31 and the EGR valve 32 when the EGR shutoff valve 35 is shifted from the closed state to the opened state after the warm-up operation of the engine 1.

Further, the EGR shutoff valve 35 is operative to take the closed state when the temperature of the cooling water is lower than the predetermined value THWth. Accordingly, the EGR shutoff valve 35 is allowed to take the closed state when the EGR cooler 31 is not yet warmed because of a low temperature of the cooling water, with the result that the exhaust gas is prevented from flowing into the EGR passage 34, and thus the EGR gas is suppressed from being cooled down to the dew point temperature or lower, thereby making it possible to suppress the generation of the condensed water in the EGR cooler 31 and the EGR valve 32.

Although the above explanation has been made concerning the case in which the EGR apparatus 30 constitutes, what is called, a high-pressure loop "HPL" in which the exhaust gas is obtained from the upstream side of the turbine wheel 53 and is then recirculated as EGR gas to the downstream side of the compressor wheel 52, the present invention is not limited to this case. The EGR apparatus 30 may constitute, what is called, a low-pressure loop, "LPL" in which the exhaust gas is obtained from the downstream side of the turbine wheel 53 and is then recirculated as EGR gas to the upstream side of the compressor wheel 52 according to the present invention.

Although the above explanation has further been made concerning the case in which the EGR apparatus 30 is applied to the engine 1 provided with the turbo unit 51, the present invention is not limited to this case. The exhaust gas recirculation apparatus explained in the above may be applied to the engine 1 not provided with a turbo unit.

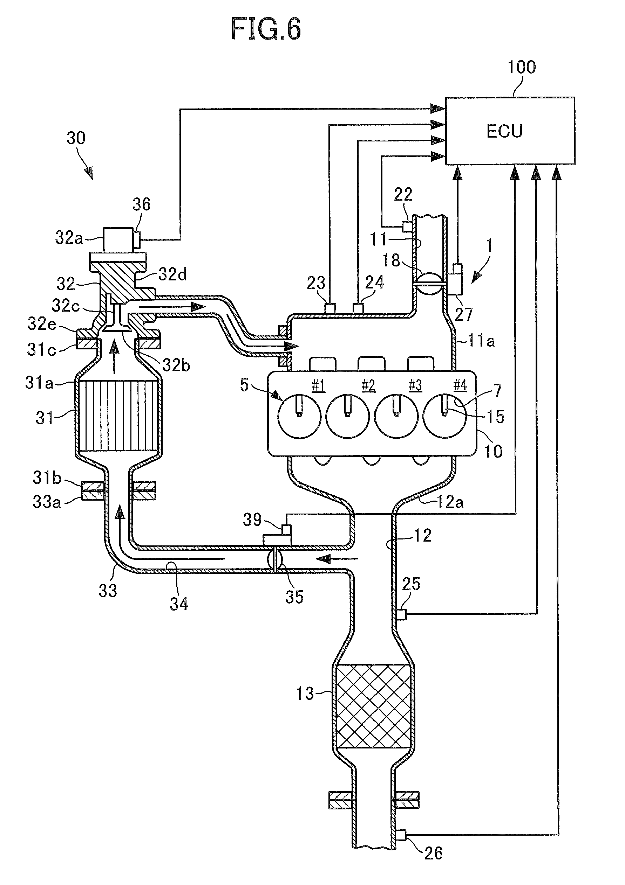

In this case, as shown in FIG. 6, the EGR apparatus 30 is disposed to have the exhaust gas recirculated from between the exhaust manifold 12a in the exhaust passage 12 and the catalytic device 13, to the intake manifold 11a. The EGR pipe 33 at the upstream side in the EGR apparatus 30 may be connected to the downstream side of the catalytic device 13.

Although the above explanation has been made concerning the case in which the cooling water is supplied to both of the EGR cooler 31 and the EGR valve 32, the present invention is not limited to this case. The present invention may otherwise be applied to the case in which the cooling water is supplied only to the EGR cooler 31. In this case, the EGR valve 32 is adapted to be heated by heat transmitted from the EGR cooler 31 during the warm-up operation of the engine 1. Moreover, the above explanation has been made concerning the case in which the EGR cooler 31 and the EGR valve 32 are formed as separate parts and both are connected to each other not through the EGR pipe 33. However, it may be considered that the EGR cooler 31 and the EGR valve 32 are configured to be accommodated in one casing. In this case, the condensed water can be prevented from being generated in the EGR cooler 31 and the EGR valve 32 when the EGR shutoff valve 35 is shifted to the opened state, regardless of whether or not the cooling water is supplied to the EGR valve 32 during the warm-up operation of the engine 1. This is because heat is transferred from the EGR cooler 31 to the EGR valve 32 through the one casing.

Further, the above explanation has been directed to the case in which the cooling water circuit 40 has the first passage 47 and the second passage 48. The first passage 47 is adapted to supply the cooling water discharged from the water pump 44 to the engine 1, the heater core 41, the EGR cooler 31, the EGR valve 32, and the throttle valve 18 in this order, and to return the cooling water to the water pump 44. The second passage 48 is bifurcated from the first passage 47 by the three-way valve not shown, provided in the downstream of the cylinder head 10 constituting part of the engine 1, and is adapted to supply part of the cooling water flowed from the engine 1 to the radiator 42, and to return the cooling water to the water pump 44. However, the cooling water circuit 40 may be constructed to have a first passage in which the cooling water passing through the radiator 42 is supplied to the EGR cooler 31 and the EGR valve 32, and a second passage in which the cooling water passing through the radiator 42 is supplied to the engine 1 and the heater core 41.

Further, FIGS. 1 and 6 show the case in which the EGR pipe 33 is formed integrally with the exhaust manifold 12a, however, the present invention is not limited to this case. The EGR pipe 33 and the exhaust manifold 12a may be connected with each other through a hermetical sealing flange and the like, according to the present invention.

Further, the above explanation has been made concerning the case in which the EGR apparatus 30 is applied to the vehicle with the engine 1 constructed by a gasoline engine mounted thereon, however, the present invention is not limited to this case. The EGR apparatus 30 may be applied to a vehicle with a known internal combustion engine such as a diesel engine and the like mounted thereon, according to the present invention.

Further, the above explanation has also been made concerning the case in which the EGR apparatus 30 is applied to a port injection type of engine which is adapted to inject the fuel to the intake ports, however, the present invention is not limited to this case. The EGR apparatus 30 may be applied to a cylinder injection type of engine which is adapted to inject the fuel directly to each of the combustion chambers 7 according to the present invention. Alternatively, the EGR apparatus 30 may be applied to an engine which can perform both of the port injection and the cylinder injection, according to the present invention.

In addition, the EGR apparatus 30 may be applied not only to a vehicle powered by the engine alone, but also to a hybrid vehicle powered by an engine and an electric motor as well. In this case, as compared with the vehicle powered by the engine alone, the hybrid vehicle is more likely to be in the state where the vehicle has a long stopping time of the engine, thereby resulting in increasing the temperature THW of the cooling water lower than the predetermined value THWth. Accordingly, the EGR apparatus 30 according to the present embodiment applied to the hybrid vehicle can remarkably entail advantageous effects to suppress the generation of the condensed water in the EGR passage.

From the foregoing description, it will be understood that the exhaust gas recirculation apparatus of the internal combustion engine according to the present invention can attain advantageous effects to suppress the condensed water from being generated in the EGR passage in comparison with the conventional apparatus, and is useful as an exhaust gas recirculation apparatus of an internal combustion engine.

### {REFERENCE SIGNS LIST}

- 1:: engine
- 5:: cylinder
- 7:: combustion chamber
- 10:: cylinder head
- 11:: intake passage
- 11a:: intake manifold
- 12:: exhaust passage
- 12a:: exhaust manifold
- 18:: throttle valve
- 21:: cooling water temperature sensor
- 22:: air flow meter
- 29:: accelerator opening degree sensor
- 30:: EGR apparatus
- 31:: EGR cooler
- 31a:: casing
- 31b:: fastening portion
- 32:: EGR valve
- 32a:: linear solenoid
- 32b:: valve body
- 32c:: shaft
- 32d:: casing
- 32e:: fastening portion
- 33:: EGR pipe
- 33a:: fastening portion
- 34:: EGR passage
- 35:: EGR shutoff valve
- 36:: valve opening degree sensor
- 37:: engine rotational speed sensor
- 39:: shutoff valve opening degree sensor
- 40:: cooling water circuit
- 44:: water pump
- 100:: ECU

## Claims

1. An exhaust gas recirculation apparatus of an internal combustion engine for recirculating part of exhaust gas discharged into an exhaust passage from the internal combustion engine to an intake passage as EGR gas, comprising:
an EGR pipe formed therein with an EGR passage held in communication with the exhaust passage and the intake passage;
an EGR cooler provided in the EGR passage to cool the EGR gas;
a first valve provided in the EGR passage between the EGR cooler and the exhaust passage and operative to selectively take an opened state or a closed state, the first valve being operative to shut off the EGR gas from flowing into the EGR passage when the first valve takes the closed state;
a second valve provided in the EGR passage between the EGR cooler and the intake passage and operative to adjust an amount of the EGR gas flowing into the intake passage; and
the EGR cooler and the second valve being directly connected with each other not through the EGR pipe.

2. The exhaust gas recirculation apparatus of the internal combustion engine as set forth in claim 1, further comprising a cooling water circuit for supplying cooling water to the internal combustion engine, the cooling water circuit being formed to allow the cooling water to be supplied to the EGR cooler and the second valve.

3. The exhaust gas recirculation apparatus of the internal combustion engine as set forth in claim 2, wherein the first valve is operative to take the closed state when a temperature of the cooling water is lower than a predetermined value.

4. The exhaust gas recirculation apparatus of the internal combustion engine as set forth in claim 3, wherein the predetermined value is set to a temperature at which the second valve takes the opened state after a warm-up operation of the internal combustion engine is finished.

5. The exhaust gas recirculation apparatus of the internal combustion engine as set forth in any one of claims 1 to 4, wherein the EGR cooler and the second valve are accommodated in one casing.
